# EUROPÄISCHE PATENTSCHRIFT

(11) **EP 2 954 089 B1**
(45) Veröffentlichungstag und Bekanntmachung des Hinweises auf die Patenterteilung: **29.08.2018**
(21) Anmeldenummer: 14721274.0
(22) Anmeldetag: 22.04.2014
(51) Int. Cl.: B23K 101/00, B23K 26/40, B23K 31/02, C23C 10/00, C23C 10/48, C23C 10/50, C23C 10/60, B23P 6/00, F01D 5/00, B23K 103/04, B23K 26/361, B23K 103/00

(54) **SCHWEISSEN VON ALITIERTEN KOMPONENTEN UND EINE ALITIERTE KOMPONENTE**
WELDING OF ALUMINISED COMPONENTS AND AN ALUMINISED COMPONENT
SOUDAGE D'ÉLÉMENTS ALUMINISÉS ET UN ÉLÉMENT ALUMINISÉ

(30) Priorität: 08.05.2013 EP 13166930
(43) Veröffentlichungstag der Anmeldung: 16.12.2015
(73) Patentinhaber: Siemens Aktiengesellschaft, 80333 München (DE)
(72) Erfinder: SEIPOLD, Frank, 13158 Berlin (DE); SPERLICH, Kathrin, 10555 Berlin (DE)
(86) Internationale Anmeldenummer: PCT/EP2014/058064
(87) Internationale Veröffentlichungsnummer: WO 2014/180652

(56) Entgegenhaltungen:
- EP-A2- 1 995 346
- WO-A1-2009/036776
- US-A- 5 873 703
- US-A1- 2005 139 581
- US-A1- 2008 028 605

## Beschreibung

Die Erfindung betrifft das Schweißen von alitierten Komponenten und eine alitierte Komponente.
Gasturbinenkomponenten wie z.B. Brennerkomponenten weisen Stähle auf, die zur Verbesserung der Korrosion alitiert sind. Bisher wurden solche Komponenten nicht repariert.

US 2005/0139581 A1 offenbart ein Schweißverfahren zur Reparatur von Superlegierungskomponenten.

EP 1 995 346 A2 offenbart eine Reparatur von Gasturbinenkomponenten mit einer Aluminidbeschichtung.

WO 2009/036776 A1 offenbart eine Gasturbinenkomponente, die Schweißstellen aufweist, die ebenfalls nach der Schweißung alitiert ist.

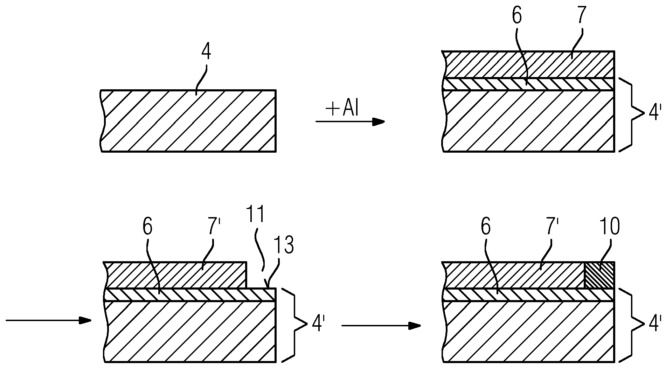

Es ist daher Aufgabe der Erfindung ein Verfahren aufzuzeigen, mit dem alitierte Komponenten repariert oder geschweißt werden können.
Die Aufgabe wird gelöst durch ein Verfahren gemäß Anspruch 1 und eine Komponente gemäß Anspruch 8.
In den Unteransprüchen sind weitere vorteilhafte Maßnahmen aufgelistet, die beliebig miteinander kombiniert werden können, um weitere Vorteile zu erzielen.
Durch die Verfahrensmerkmale und die Komponentenmerkmale sind Komponenten, die alitiert sind, zu schweißen bzw. weisen eine vorteilhafte Schweißung auf.
Die Figur und die Beschreibung stellen nur Ausführungsbeispiele der Erfindung dar.
Es zeigt die Figur schematisch den Ablauf des erfindungsgemäßen Verfahrens und die erfindungsgemäße Komponente.
Ein Substrat 4, insbesondere aus einem Stahl, ganz insbesondere aus 16Mo3, soll geschweißt oder repariert werden.
Dabei wird in einem ersten Schritt eine Alitierung (+Al) durchgeführt, die zu einer Diffusionsschicht 6 innerhalb des Substrats 4 und dieses zu einem modifizierten Substrat 4' führt und eine Aufbauschicht 7 erzeugt.

Die Alitierung des Substrats kann nur lokal erfolgen.

Die Diffusionsschicht 6 weist vorzugweise eine Tiefe von 150µm bis 300µm auf.

Die Aufbauschicht 7 weist vorzugsweise ein Dicke von 100µm auf.

Ein Teil der Aufbauschicht 7 wird insbesondere lokal von der Oberfläche 13 der Diffusionsschicht 6 entfernt, so dass nur ein Rest 7' der Aufbauschicht vorhanden ist. Dabei wird die Aufbauschicht vollständig bezüglich ihrer Dicke entfernt. Somit bildet eine Oberfläche 13 der Diffusionsschicht 6 eine äußere Oberfläche.

Das lokale Entfernen der Aufbauschicht ist dann sinnvoll, wenn nur ein Teil der alitierten Oberfläche des Substrats 4' geschweißt werden soll.

Im nächsten Schritt wird der freigelegte Bereich 11 der Oberfläche 13 mit einer Schweißung 10 versehen.

Die Vorgehensweise nach dem Stand der Technik bestand darin, nur die oxidierte Oberfläche von Aluminium der Aufbauschicht 7 zu entfernen.

Die Entfernung des Teils der Aufbauschicht 7 kann chemisch und/oder mechanisch und/oder durch Laserabtragung erfolgen.

Durch die Schweißung 10 können Brennerkomponenten miteinander verschweißt werden oder es wird Material zur Wandverdickung aufgebaut.

Die reparierte Komponente weist ein Substrat 4' mit einer Diffusionsschicht 6 und einer Schweißung 10 auf der Diffusionsschicht 6 zusammen mit einer Aufbauschicht 7' auf der Oberfläche 13 der Diffusionsschicht 6 nebeneinander auf.

## Patentansprüche

1. Verfahren
zum Reparieren eines Bauteils mit einem Substrat (4),
bei dem eine Alitierung des Substrats (4) durchgeführt wird,
die zu einer Diffusionsschicht (6) im Substrat (4) und
zu einer Aufbauschicht (7) auf der Diffusionsschicht (6) führt,
wobei in einem nächsten Schritt zumindest teilweise die Aufbauschicht (7) entfernt wird,
und dann eine Schweißung (10) im Bereich (11) des entfernten Materials der Aufbauschicht (7) durchgeführt wird,
bei dem die Aufbauschicht (7) bis zur Oberfläche (13) der Diffusionsschicht (6) abgetragen wird.

2. Verfahren nach Anspruch 1,
bei dem das Substrat (4) ein Stahl darstellt,
insbesondere Molybdänhaltiger Stahl,
ganz insbesondere 16Mo3.

3. Verfahren nach einem oder beiden der Ansprüche 1 oder 2, bei dem das Substrat (4) nur teilweise alitiert wird.

4. Verfahren nach einem oder mehreren der vorhergehenden Ansprüche,
bei dem die Aufbauschicht (7) nur lokal von der Oberfläche (13) entfernt wird.

5. Verfahren nach einem oder mehreren der vorhergehenden Ansprüche 1, 2 oder 3, bei dem die Aufbauschicht (7) vollständig entfernt wird.

6. Verfahren nach einem oder mehreren der vorhergehenden Ansprüche,
bei dem als Material für die Auftragsschweißung Stahl verwendet wird,
insbesondere Molybdänhaltiger Stahl,
ganz insbesondere 16Mo3.

7. Verfahren nach einem oder mehreren der vorhergehenden Ansprüche,
bei dem das Substrat (4) des Bauteils bereits eine Alitierung aufweist.

8. Komponente,
aufweisend ein alitiertes Substrat (4) mit einer Diffusionsschicht (6) innerhalb des Substrats (4'),
wobei auf der Diffusionsschicht (6) die bei der Alitierunq entstandene Aufbauschicht (7') und eine Schweißung (10) vorhanden sind.

9. Komponente nach Anspruch 8, die aus dem alitierten Substrat (4) mit der Diffusionsschicht (6) innerhalb des Substrats (4') besteht,
wobei auf der Diffusionsschicht (6) die bei der Alitierung entstandene Aufbauschicht (7') und eine Schweißung (10) vorhanden sind.

10. Komponente nach einem oder beiden der Ansprüche 8 oder 9,
bei dem das Substrat (4) des Bauteils bereits eine Alitierung aufweist.

11. Komponenten nach einem oder mehreren der Ansprüche 8, 9 oder 10,
die eine reparierte Komponente darstellt.

12. Komponenten nach einem oder mehreren der Ansprüche 8, 9, 10 oder 11,
bei der die Schweißung (10) direkt auf der Diffusionsschicht (6) vorhanden ist.

## Claims

1. Method
for repairing a component having a substrate (4), in which the substrate (4) undergoes alitizing,
which leads to a diffusion layer (6) in the substrate (4) and to a build-up layer (7) on the diffusion layer (6), wherein in a next step the build-up layer (7) is at least partially removed,
and then welding (10) is carried out in the region (11) of the removed material of the build-up layer (7),
in which the build-up layer (7) is removed as far as the surface (13) of the diffusion layer (6).

2. Method according to Claim 1,
in which the substrate (4) is a steel,
in particular molybdenum-containing steel,
very particularly 16Mo3.

3. Method according to one or both of Claims 1 and 2,
in which the substrate (4) is only partially alitized.

4. Method according to one or more of the preceding claims,
in which the build-up layer (7) is removed only locally from the surface (13).

5. Method according to one or more of the preceding Claims 1, 2 and 3, in which the build-up layer (7) is entirely removed.

6. Method according to one or more of the preceding claims, in which the material used for the deposition welding is steel,
in particular molybdenum-containing steel,
very particularly 16Mo3.

7. Method according to one or more of the preceding claims,
in which the substrate (4) of the component is already alitized.

8. Component,
having an alitized substrate (4) having a diffusion layer (6) within the substrate (4'),
wherein there are on the diffusion layer (6) the build-up layer (7') resulting from alitizing and a weld (10).

9. Component according to Claim 8, which consists of the alitized substrate (4) having the diffusion layer (6) within the substrate (4'),
wherein there are on the diffusion layer (6) the build-up layer (7') resulting from alitizing and a weld (10).

10. Component according to one or both of Claims 8 and 9,
in which the substrate (4) of the component is already alitized.

11. Components according to one or more of Claims 8, 9 and 10, which is a repaired component.

12. Components according to one or more of Claims 8, 9, 10 and 11,
in which the weld (10) is present directly on the diffusion layer (6).

## Revendications

1. Procédé
de réparation d'une pièce ayant un substrat (4),
dans lequel on effectue une aluminisation du substrat (4), qui donne une couche (6) de diffusion dans le substrat (4) et une couche (7) d'accumulation sur la couche (6) de diffusion,
dans lequel, dans le stade suivant immédiatement, on élimine, au moins en partie la couche (7) d'accumulation, puis, on effectue un soudage (10) dans la région (11) du matériau éliminé de la couche (7) d'accumulation,
dans lequel on enlève la couche (7) d'accumulation jusqu'à la surface (13) de la couche (6) de diffusion.

2. Procédé suivant la revendication 1,
dans lequel le substrat (4) représente un acier,
notamment un acier contenant du molybdène
tout à fait particulièrement du 16Mo3.

3. Procédé suivant l'une ou les deux des revendications 1 ou 2,
dans lequel on n'aluminise le substrat (4) que partiellement.

4. Procédé suivant l'une ou plusieurs des revendications précédentes,
dans lequel on n'élimine la couche (7) d'accumulation que localement de la surface (13).

5. Procédé suivant l'une ou plusieurs des revendications précédentes 1, 2 ou 3,
dans lequel on élimine complètement la couche (7) d'accumulation.

6. Procédé suivant l'une ou plusieurs des revendications précédentes,
dans lequel on utilise de l'acier comme matériau de soudage à rechargement,
notamment de l'acier contenant du molybdène,
tout à fait particulièrement du 16Mo3.

7. Procédés suivant l'une ou plusieurs des revendications précédentes,
dans lequel le substrat (4) de la pièce a déjà une aluminisation.

8. Elément,
comportant un substrat (4) aluminisé avec une couche (6) de diffusion au sein du substrat (4'),
dans lequel il y a, sur la couche (6) de diffusion, la couche (7') d'accumulation créée par l'aluminisation et une soudure (10).

9. Elément suivant la revendication 8, qui est constitué du substrat (4) aluminisé avec la couche (6) de diffusion au sein du substrat (4'),
dans lequel il y a, sur la couche (6) de diffusion, la couche (7') d'accumulation créée lors de l'aluminisation et une soudure (10).

10. Elément suivant l'une des ou les deux des revendications 8 ou 9,
dans lequel le substrat (4) de la pièce a déjà une aluminisation.

11. Elément suivant l'une ou plusieurs des revendications 8, 9 ou 10,
qui constitue un élément réparé.

12. Elément suivant l'une ou plusieurs des revendications 8, 9, 10 ou 11,
dans lequel la soudure (10) est présente directement sur la couche (6) de diffusion.
